# EUROPEAN PATENT APPLICATION

(11) **EP 4 325 613 A1**
(43) Date of publication of application: **21.02.2024**
(21) Application number: 23189306.6
(22) Date of filing: 02.08.2023
(51) Int. Cl.: H01M 10/04, H01M 50/172, H01M 50/342, H01M 50/383

(54) **ELECTROCHEMICAL DEVICE AND ELECTRICAL DEVICE**

(30) Priority: 02.08.2022 CN 202210922688
(71) Applicant: Ningde Amperex Technology Limited, Zhangwan Town, Jiaocheng District Ningde City Fujian 352100 (CN)
(72) Inventor: HU, Dongge, Ningde City, 352100 (CN); CHEN, Honghao, Ningde City, 352100 (CN); ZHI, Ying, Ningde City, 352100 (CN); LI, Lei, Ningde City, 352100 (CN)
(74) Representative: Icosa

(57) **Abstract**

An electrochemical device (100) includes a shell (30), an electrode post (10), and an electrode assembly (20). A through-hole (321) is provided on the shell (30). The electrode post (10) is disposed on the shell (30) and at least partially accommodated in the through-hole (321). The electrode post (10) is electrically connected to the electrode assembly (20). A frangible portion (11) is provided at a position corresponding to the through-hole (321) on the electrode post (10). The frangible portion (11) is configured to be burst open when a pressure in the shell (30) reaches a threshold, so as to implement communication between inside and outside of the shell (30) to relieve the pressure. Provided on the electrode post (10), the frangible portion (11) can be broken when the pressure in the electrochemical device (100) reaches the threshold.

## Description

### TECHNICAL FIELD

This application relates to the field of battery technology, and in particular, to an electrochemical device and electrical device.

### BACKGROUND

With the development of new energy technology, energy storage devices are widely applied in more fields such as mobile phones, laptop computers, electric power carts, electric vehicles, electric airplanes, electric ships, electric toy cars, electric toy ships, electric toy airplanes, and electric tools.

As an energy storage device, an electrochemical device generally outputs electrical energy through a electrochemical reaction between an electrode assembly and an electrolyte solution. Both energy density and safety of the electrochemical device need to be considered. Therefore, how to enhance the safety of the electrochemical device is an urgent technical issue.

### SUMMARY

Some embodiments of this application provide an electrochemical device and an electrical device to improve safety performance of the electrochemical device.

According to a first aspect, an embodiment of this application provides an electrochemical device. The electrochemical device includes a shell, an electrode post, and an electrode assembly disposed in the shell. A through-hole is provided on the shell. The electrode post is disposed on the shell and at least partially accommodated in the through-hole. The electrode post is electrically connected to the electrode assembly. A frangible portion is provided at a position corresponding to the through-hole on the electrode post. The frangible portion is configured to be burst open when a pressure in the shell reaches a threshold, so as to implement communication between inside and outside of the shell to relieve the pressure.

In the above technical solution, the frangible portion provided on the electrode post can be broken when the pressure in the electrochemical device reaches the threshold, so as to relieve the pressure in the electrochemical device, reduce the safety hazards such as explosion and fire of the electrochemical device, and improve the safety performance of the electrochemical device. Provided on the electrode post, the frangible portion can avoid impairment of the structural strength and structural integrity of the shell in a case that the frangible portion is provided on the shell of the electrochemical device, and further improve the safety of the electrochemical device. The process of creating the frangible portion on the electrode post is less difficult than the process of creating the frangible portion on the shell of the electrochemical device.

In some embodiments in the first aspect of this application, the shell includes a first wall. The through-hole is provided in the first wall. A groove is provided on the electrode post along a thickness direction of the first wall to form the frangible portion.

In the above technical solution, by creating a groove on the electrode post, a frangible portion is formed at a part corresponding to the bottom face of the groove on the electrode post, thereby simplifying the formation of the frangible portion and reducing the difficulty of preparing the frangible portion.

In some embodiments in the first aspect of this application, the electrode post includes a body portion and a flange portion. The body portion penetrates the through-hole. The flange portion protrudes beyond an outer peripheral surface of the body portion along a radial direction of the body portion. The flange portion is partially recessed at a junction between the flange portion and the body portion along a thickness direction of the flange portion to form the groove.

In the above technical solution, the flange portion protrudes beyond the outer peripheral surface of the body portion along the radial direction of the body portion, and the groove is provided on the flange portion. Therefore, the frangible portion is formed on the flange portion. When the internal pressure of the electrochemical device reaches a threshold, the pressure is relieved at the flange portion, thereby reducing the risk of an electrical device or a charging device obstructing the frangible portion from relieving the pressure, and further improving the safety performance of the electrochemical device.

In some embodiments in the first aspect of this application, along the thickness direction of the first wall, at least a part of a projection of the frangible portion on the first wall falls in the through-hole.

In the above technical solution, by letting at least a part of the projection of the frangible portion on the first wall fall in the through-hole, the frangible portion avoids the hole wall of the through-hole. When the frangible portion is broken, the first wall will not obstruct the internal pressure of the electrochemical device from being released from the frangible portion, thereby improving the safety performance of the electrochemical device.

In some embodiments in the first aspect of this application, along the thickness direction of the first wall, a thickness of the flange portion is L₁, and a depth of the groove is L₂, satisfying 30% ≤ L₂/L₁ ≤ 98%.

In the above technical solution, the thickness L₁ of the flange portion and the depth L₂ of the groove satisfy 30% ≤ L₂/L₁ ≤ 98%. In this way, the frangible portion is strong enough to withstand the pressure fluctuation inside the electrochemical device during normal charge and discharge of the electrochemical device, and, when the internal pressure of the electrochemical device reaches the threshold, the frangible portion can be broken in time to release the internal pressure of the electrochemical device, thereby reducing the safety hazards such as fire and explosion of the electrochemical device.

In some embodiments in the first aspect of this application, 0.1 mm ≤ L₁ ≤ 0.2 mm, and 30% ≤ L₂/L₁ ≤ 95%.

In the above technical solution, in a case that the thickness L₁ of the flange portion satisfies 0.1 mm ≤ L₁ ≤ 0.2 mm, the thickness L₁ of the flange portion and the depth L₂ of the groove satisfy 30% ≤ L₂/L₁ ≤ 95%. In this way, the frangible portion is strong enough to withstand the pressure fluctuation inside the electrochemical device during normal charge and discharge of the electrochemical device, and, when the internal pressure of the electrochemical device reaches the threshold, the frangible portion can be broken in time to release the internal pressure of the electrochemical device, thereby reducing the safety hazards such as fire and explosion of the electrochemical device.

In some embodiments in the first aspect of this application, 0.2 mm < L₁ ≤ 0.5 mm, and 60% ≤ L₂/L₁ ≤ 98%.

In the above technical solution, in a case that the thickness L₁ of the flange portion satisfies 0.2 mm < L₁ ≤ 0.5 mm, the thickness L₁ of the flange portion and the depth L₂ of the groove satisfy 60% ≤ L₂/L₁ ≤ 98%. In this way, the frangible portion is strong enough to withstand the pressure fluctuation inside the electrochemical device during normal charge and discharge of the electrochemical device, and, when the internal pressure of the electrochemical device reaches the threshold, the frangible portion can be broken in time to release the internal pressure of the electrochemical device, thereby reducing the safety hazards such as fire and explosion of the electrochemical device.

In some embodiments in the first aspect of this application, strength of the flange portion is S, 100 MPa ≤ S ≤ 500 MPa, and 30% ≤ L₂/L₁ ≤ 95%.

In the above technical solution, in a case that the strength S of the flange portion satisfies 100 MPa ≤ S ≤ 500 MPa, the thickness L₁ of the flange portion and the depth L₂ of the groove satisfy 30% ≤ L₂/L₁ ≤ 95%. In this way, the frangible portion is strong enough to withstand the pressure fluctuation inside the electrochemical device during normal charge and discharge of the electrochemical device, and, when the internal pressure of the electrochemical device reaches the threshold, the frangible portion can be broken in time to release the internal pressure of the electrochemical device, thereby reducing the safety hazards such as fire and explosion of the electrochemical device.

In some embodiments in the first aspect of this application, strength of the flange portion is S, S > 500 MPa, and 60% ≤ L₂/L₁ ≤ 98%.

In the above technical solution, in a case that the strength S of the flange portion satisfies S > 500 MPa, the thickness L₁ of the flange portion and the depth L₂ of the groove satisfy 60% ≤ L₂/L₁ ≤ 98%. In this way, the frangible portion is strong enough to withstand the pressure fluctuation inside the electrochemical device during normal charge and discharge of the electrochemical device, and, when the internal pressure of the electrochemical device reaches the threshold, the frangible portion can be broken in time to release the internal pressure of the electrochemical device, thereby reducing the safety hazards such as fire and explosion of the electrochemical device.

In some embodiments in the first aspect of this application, the groove extends along a circumferential direction of the body portion.

In the above technical solution, the groove extends along the circumferential direction of the body portion. Therefore, the frangible portion formed correspondingly extends along the circumferential direction of the body portion. The space on the flange portion is utilized reasonably to form a frangible portion that includes a relatively large pressure relief area. Further, this arrangement enables the pressure to be released along the circumferential direction of the body portion, and improves uniformity of pressure release.

In some embodiments in the first aspect of this application, a central angle corresponding to the groove is α, satisfying 45° ≤ α ≤ 315°.

In the foregoing technical solution, the central angle α corresponding to the groove is set to satisfy 45° ≤ α ≤ 315°. In this way, the central angle of the frangible portion formed by the groove correspondingly falls within a range of 45° to 315°, so as to ensure that the frangible portion provides a sufficient pressure relief area to facilitate quick pressure relief. In addition, this setting prevents the body portion from being completely detached from the flange portion as impacted by the internal pressure of the electrochemical device after the frangible portion is broken, and avoids the occurrence of safety accidents caused by the complete detachment of the body portion from the flange portion under the impact of the internal pressure of the electrochemical device.

In some embodiments in the first aspect of this application, the central angle satisfies 135° ≤ α ≤ 270°.

In the foregoing technical solution, the central angle α corresponding to the groove is set to satisfy 135° ≤ α ≤ 270°. Therefore, the central angle of the frangible portion formed by the groove correspondingly falls within a range of 135° to 270°, so as to ensure that the frangible portion provides a sufficient pressure relief area to facilitate quick pressure relief. In addition, this setting provides a relatively large connection area between the body portion and the flange portion after the frangible portion is broken, makes the body portion unlikely to be completely detached from the flange portion as impacted by the internal pressure of the electrochemical device, and avoids the occurrence of safety accidents caused by the complete detachment of the body portion from the flange portion under the impact of the internal pressure of the electrochemical device.

In some embodiments in the first aspect of this application, a width of the groove is 0.04 mm to 0.4 mm.

In the above technical solution, the width of the groove is 0.04 mm to 0.4 mm, thereby ensuring a sufficient pressure relief area on the frangible portion correspondingly formed by the groove.

In some embodiments in the first aspect of this application, the width of the groove is 0.1 mm to 0.3 mm.

In the above technical solution, the width of the groove is 0.1 mm to 0.3 mm, thereby ensuring a sufficient pressure relief area on the frangible portion correspondingly formed by the groove.

In some embodiments in the first aspect of this application, along an axial direction of the body portion, a cross-sectional shape of the groove is at least one of a trapezoid, a triangle, a quadrangle, or a semiellipse.

In the above technical solution, the cross-sectional shape of the groove is a trapezoid, a triangle, a quadrangle, or a semiellipse. The structure is simple and facilitates processing and molding.

In some embodiments in the first aspect of this application, the electrochemical device further includes: a bonding layer, where the flange portion is connected to the first wall by the bonding layer.

In the above technical solution, the flange portion is connected to the first wall by the bonding layer. The connection manner is convenient, and makes the connection stable between the electrode post and the shell.

In some embodiments in the first aspect of this application, along the radial direction of the body portion, a distance between the bonding layer and the outer peripheral surface of the body portion is greater than a width of the groove.

In the above technical solution, the distance between the bonding layer and the outer peripheral surface of the body portion is greater than the width of the groove, thereby avoiding a problem that the bonding layer blocks the opening of the groove and obstructs the frangible portion from relieving pressure.

According to a second aspect, an embodiment of this application provides an electrical device. The electrical device includes the electrochemical device according to any one of the embodiments in the first aspect.

In the above technical solution, the electrochemical device according to any one of the embodiments in the first aspect is of relatively high safety, and the electrical device powered by the electrochemical device according to any one of the embodiments in the first aspect achieves higher electrical safety.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of an electrochemical device according to some embodiments of this application;
FIG. 2 is a schematic structural diagram of an electrochemical device according to some other embodiments of this application;
FIG. 3 is a schematic structural diagram of an electrochemical device according to still some other embodiments of this application;
FIG. 4 is a schematic structural diagram of an electrochemical device according to yet some other embodiments of this application;
FIG. 5 is an axonometric projection drawing of an electrode post according to some embodiments of this application;
FIG. 6 is a cross-sectional view of an electrode post according to some embodiments of this application;
FIG. 7 is a schematic diagram of a fit between an electrode post and a shell according to some embodiments of this application;
FIG. 8 is a schematic diagram of a first wall, a bonding layer, and an electrode post in an unassembled form according to an embodiment of this application;
FIG. 9 is a schematic diagram of a fit between an electrode post and a shell according to some other embodiments of this application;
FIG. 10 is a schematic diagram of a fit between an electrode post and a shell according to still some other embodiments of this application;
FIG. 11 is a schematic diagram of a fit between an electrode post and a shell according to yet some other embodiments of this application;
FIG. 12 is a cross-sectional view of an electrode post according to some other embodiments of this application;
FIG. 13 is a cross-sectional view of an electrode post according to still some other embodiments of this application;
FIG. 14 is a cross-sectional view of an electrode post according to yet some other embodiments of this application;
FIG. 15 is a close-up view of an electrochemical device according to some embodiments of this application;
FIG. 16 is a top view of an electrode post according to some embodiments of this application;
FIG. 17 is a top view of an electrode post according to some other embodiments of this application;
FIG. 18 is a cross-sectional view of an electrode post according to still some other embodiments of this application;
FIG. 19 is a cross-sectional view of an electrode post according to some other embodiments of this application; and
FIG. 20 is a cross-sectional view of an electrode post according to yet some other embodiments of this application.

List of references: 100-electrochemical device; 10-electrode post; 10a-first electrode post; 10b-second electrode post; 11-frangible portion; 12-groove; 121-first groove wall; 122-second groove wall; 13-body portion; 131-outer peripheral surface of body portion; 14-flange portion; 141-first surface; 142-second surface; 20-electrode assembly; 21-positive electrode plate; 22-negative electrode plate; 23-separator; 24-positive tab; 25-negative tab; 30-shell; 31-accommodation space; 32-first wall; 321-through-hole; 322-clearance; 323-third surface; 324-fourth surface; 33-housing; 40-bonding layer; 41-jack; X-radial direction of body portion; Y-thickness direction of first wall.

### DETAILED DESCRIPTION OF EMBODIMENTS

To make the objectives, technical solutions, and advantages of the embodiments of this application clearer, the following gives a clear and complete description of the technical solutions in the embodiments of this application with reference to the drawings in the embodiments of this application. Apparently, the described embodiments are merely a part of but not all of the embodiments of this application. The components described and illustrated in the drawings according to the embodiments of this application generally may be arranged and designed in a variety of different configurations.

Therefore, the following detailed description of the embodiments of this application provided with reference to the drawings is not intended to limit the scope of this application as claimed, but merely represents selected embodiments of this application. All other embodiments derived by a person of ordinary skill in the art based on the embodiments of this application without making any creative efforts still fall within the protection scope of this application.

It is hereby noted that to the extent that no conflict occurs, the embodiments of this application and the features in the embodiments may be combined with each other.

It is hereby noted that similar reference numerals and letters indicate similar items in the following drawings. Therefore, once an item is defined in one drawing, the item does not need to be further defined or construed in subsequent drawings.

In the description of the embodiments of this application, it is hereby noted that an indicated direction or positional relationship is a direction or positional relationship based on illustration in the drawings, or a direction or positional relationship by which a product in use according to this application is usually placed, or a direction or positional relationship commonly understood by a person skilled in the art, and is merely intended for ease or brevity of describing this application, but does not indicate or imply that the indicated apparatus or component is necessarily located in the specified direction or constructed or operated in the specified direction. Therefore, the indicated direction or positional relationship is never to be understood as a limitation on this application. In addition, the terms "first", "second", "third", and so on are merely used for differentiated description, but not to be understood as indicating or implying order of precedence.

Currently, the market trend shows that electrochemical devices are applied more extensively. The electrochemical devices are widely applied to electric means of transport such as electric bicycles, electric motorcycles, and electric vehicles, and in many other fields such as electric tools, unmanned aerial vehicles, and energy storage devices. The market demand for electrochemical devices keeps soaring with the increase of the application fields of the electrochemical devices.

To develop an electrochemical device, a plurality of design factors need to considered, including performance parameters such as energy density, cycle life, discharge capacity, charge rate, and discharge rate, and the safety of the electrochemical device needs to be considered.

For an electrochemical device, main safety hazards come from a charging process and a discharging process. In addition, appropriate ambient temperature design is required. To effectively avoid unnecessary losses, the electrochemical device is generally protected by three protective measures. Specifically, the protective measures include at least a switch element, an appropriately selected separator material, and a pressure relief mechanism. The switch element is an element that, when a temperature or resistance of the electrochemical device reaches a specified threshold, causes the electrochemical device to stop charging or discharging. The separator is configured to separate the positive electrode plate from the negative electrode plate, and, when the temperature rises to a given value, automatically melt micron-scale (or even nanoscale) micropores attached to the separator, so as to prevent metal ions from passing through the separator and terminate internal reactions of the electrochemical device.

The pressure relief mechanism means an element or component that is broken to relieve an internal pressure when the internal pressure or temperature of the electrochemical device reaches a threshold. The threshold varies depending on design requirements. The threshold may depend on the materials of one or more of the positive electrode plate, negative electrode plate, electrolyte solution, or separator in the electrochemical device. The pressure relief mechanism may be in the form of an explosion-proof valve, a rupture disk, a gas valve, a pressure relief valve, a safety valve, or the like, and may specifically be a pressure-sensitive or temperature-sensitive element or structure. To be specific, when the internal pressure or temperature of the electrochemical device reaches a threshold, the pressure relief mechanism performs an action or is structurally destroyed to form an opening or channel for relieving the internal pressure or temperature.

The term "actuated" mentioned in this application means that the pressure relief mechanism performs an action or is activated to a specified state so that the internal pressure and temperature of the electrochemical device is relieved. The actions performed by the pressure relief mechanism may include, but without being limited to, rupturing, shattering, tearing, or bursting open at least a part of the pressure relief mechanism, or the like. When the pressure relief mechanism is actuated, high-temperature and high-pressure substances inside the electrochemical device are expelled as emissions out of the actuation position. In this way, the pressure and temperature of the electrochemical device are relieved under a circumstance of a controllable pressure or temperature to avoid potential severer accidents.

The emissions out of the electrochemical device mentioned in this application include but are not limited to: electrolyte solution, melted or split positive and negative electrode plates, fragments of the separator, reaction-induced high-temperature and high-pressure gases, flames, and the like.

The applicant hereof finds that the electrochemical device includes a shell, an electrode post, and an electrode assembly disposed in the shell, and the electrode post is disposed on the shell and electrically connected to the tab of the electrode assembly. The pressure relief mechanism is a frangible portion disposed on the shell, and is broken when the pressure inside the electrochemical device reaches a threshold, so as to release the pressure in the electrochemical device. If the frangible portion is disposed on the shell, an additional processing process is required for the shell, and the process of disposing the frangible portion on the shell is relatively difficult. Disposing the frangible portion on the shell will also disrupt the structural integrity of the shell and impair the overall structural strength of the shell, thereby reducing the safety of the electrochemical device.

In view of the above considerations, in order to alleviate the problem that the safety of the electrochemical device is reduced due to the disruption of the structural integrity of the shell and the impairment of the overall structural strength of the shell caused by the formation of the frangible portion on the shell, an embodiment of this application provides an electrochemical device. By forming a frangible portion on the electrode post, the frangible portion is broken when the pressure in the electrochemical device reaches a threshold, so as to relieve the pressure, reduce the safety hazards such as explosion and fire of the electrochemical device, and improve the safety performance of the electrochemical device. Provided on the electrode post, the frangible portion can avoid impairment of the structural strength and structural integrity of the shell in a case that the frangible portion is provided on the shell of the electrochemical device, and further improve the safety of the electrochemical device. The process of creating the frangible portion on the electrode post is less difficult than the process of creating the frangible portion on the shell of the electrochemical device.

The electrochemical device disclosed in this embodiment of this application is applicable to, but not limited to use in, an electrical device such as an electric bicycle, an electric tool, an unmanned aerial vehicle, and an energy storage device. Alternatively, an electrochemical device compliant with the working conditions specified in this application may be used as a power supply system of an electrical device to improve the charging and discharging safety of the power supply system and the electrical safety of the electrical device.

An embodiment of this application provides an electrical device powered by an electrochemical device. The electrical device may be, but is not limited to, an electronic device, an electric tool, an electric means of transport, an unmanned aerial vehicle, and an energy storage device. The electronic device may be a mobile phone, a tablet computer, a laptop computer, or the like. The electric tool may be an electric drill, an electric chainsaw, or the like. The electric means of transport may be an electric vehicle, an electric motorcycle, an electric bicycles, or the like.

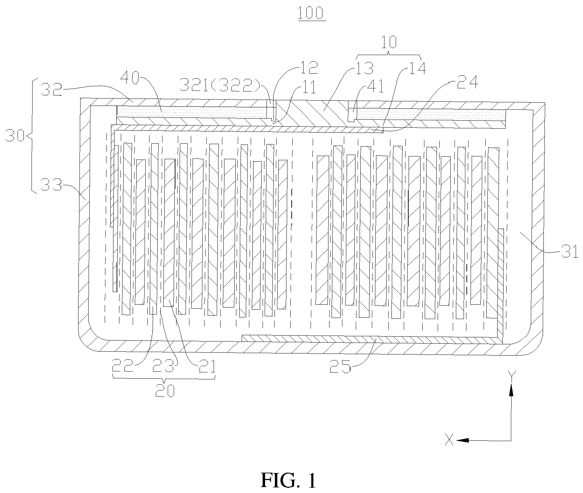

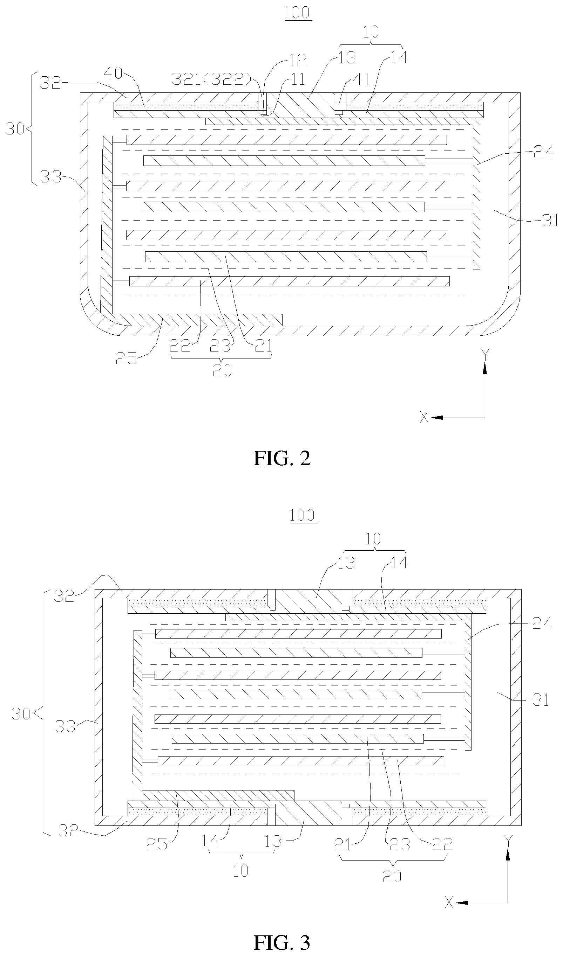

As shown in FIG. 1 and FIG. 2, an embodiment of this application provides an electrochemical device 100. The electrochemical device 100 includes an electrode post 10, an electrode assembly 20, and a shell 30. The electrode assembly 20 is disposed in the shell 30. A through-hole 321 is provided in the shell 30. The electrode post 10 is disposed on the shell 30 and at least partially accommodated in the through-hole 321. The electrode post 10 is electrically connected to the electrode assembly 20. A frangible portion 11 is provided at a position corresponding to the through-hole 321 on the electrode post 10. The frangible portion 11 is configured to be burst open when a pressure in the shell 30 reaches a threshold, so as to implement communication between inside and outside of the shell 30 to relieve the pressure.

The electrode assembly 20 may include a positive electrode plate 21, a negative electrode plate 22, and a separator 23. The electrode assembly 20 may be a jelly-roll structure formed by winding the positive electrode plate 21, the separator 23, and the negative electrode plate 22, or a stacked type structure formed by stacking the positive electrode plate 21, the separator 23, and the negative electrode plate 22. The electrode assembly 20 further includes a positive tab 24 and a negative tab 25. The part, uncoated with a positive active material layer, of the positive current collector in the positive electrode plate 21 may serve as the positive tab 24, and the part, uncoated with a negative active material layer, of the negative current collector in the negative electrode plate 22 may serve as the negative tab 25. A positive tab 24 and a negative tab 25 may be located at the same end of the electrode assembly 20, or located at two opposite ends of the electrode assembly 20 respectively.

One of the positive tab 24 or the negative tab 25 is electrically connected to one electrode post 10.

Still referring to FIG. 1 and FIG. 2, the shell 30 forms an accommodation space 31 configured to accommodate the electrode assembly 20. The electrochemical device 100 may include one electrode post 10 or two electrode posts 10. As shown in FIG. 1 and FIG. 2, in an embodiment in which the electrochemical device 100 includes one electrode post 10, the electrode post 10 is dielectrically disposed on the shell 30. Of the positive tab 24 or the negative tab 25, one is electrically connected to the electrode post 10, and the other is electrically connected to a housing 33, so that the electrode post 10 and the housing 33 form a positive electrode and a negative electrode of the electrochemical device 100 respectively. In this way, the electrochemical device 100 is charged and discharged through the positive electrode and the negative electrode. The positive tab 24 and the negative tab 25 are located at two opposite ends of the electrode assembly 20 respectively to reduce the risk of internal short circuits of the electrochemical device 100. The shell 30 is made of metal, so that the structural strength and heat resistance of the shell 30 are relatively high. The material of the shell 30 may depend on the polarity of the tab electrically connected to the shell. If a positive tab 24 is electrically connected to the shell 30, the material of the shell 30 may be aluminum. If a negative tab 25 is electrically connected to the shell 30, the material of the shell 30 may be stainless steel, nickel, or the like.

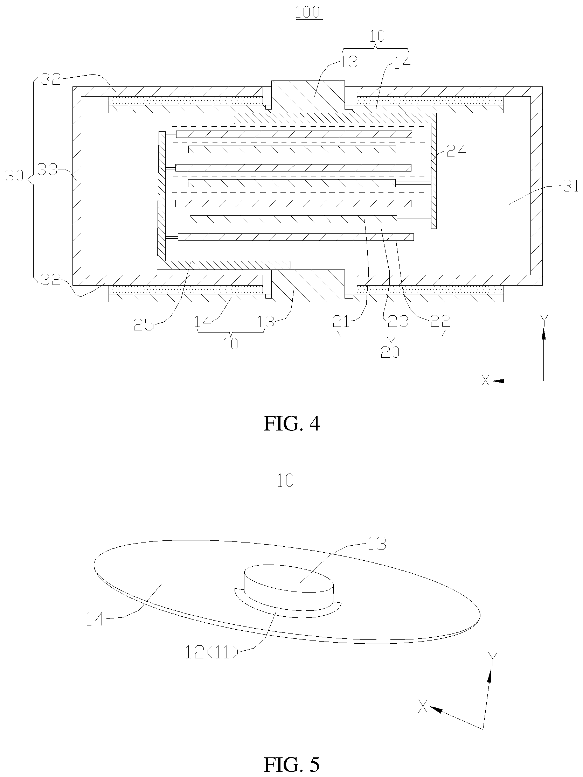

As shown in FIG. 3 and FIG. 4, in an embodiment in which the electrochemical device 100 includes two electrode posts 10, both electrode posts 10 are dielectrically disposed on the shell 30. The positive tab 24 and the negative tab 25 are electrically connected to the two electrode posts 10 respectively. The two electrode posts 10 form a positive electrode and a negative electrode of the electrochemical device 100 respectively.

The frangible portion 11 is a weakest region in the overall structure formed by the shell 30 and the electrode post 10. In this embodiment, the frangible portion 11 is also a weakest position on the electrode post 10. When the internal pressure of the electrochemical device 100 reaches a threshold, the pressure withstood by the frangible portion 11 reaches a tolerable upper limit, so that the frangible portion 11 is burst by the internal pressure of the electrochemical device 100. A corresponding position on the frangible portion 11 forms a channel of communication between inside and outside the electrochemical device 100. The channel can release the pressure in the electrochemical device 100.

The frangible portion 11 provided on the electrode post 10 can be broken when the pressure in the electrochemical device 100 reaches the threshold, so as to relieve the pressure in the electrochemical device 100, reduce the safety hazards such as explosion and fire of the electrochemical device 100, and improve the safety performance of the electrochemical device 100. Provided on the electrode post 10, the frangible portion 11 can avoid impairment of the structural strength and structural integrity of the shell 30 in a case that the frangible portion 11 is provided on the shell 30 of the electrochemical device 100, and further improve the safety of the electrochemical device 100. The process of creating the frangible portion 11 on the electrode post 10 is less difficult than the process of creating the frangible portion 11 on the shell 30 of the electrochemical device 100.

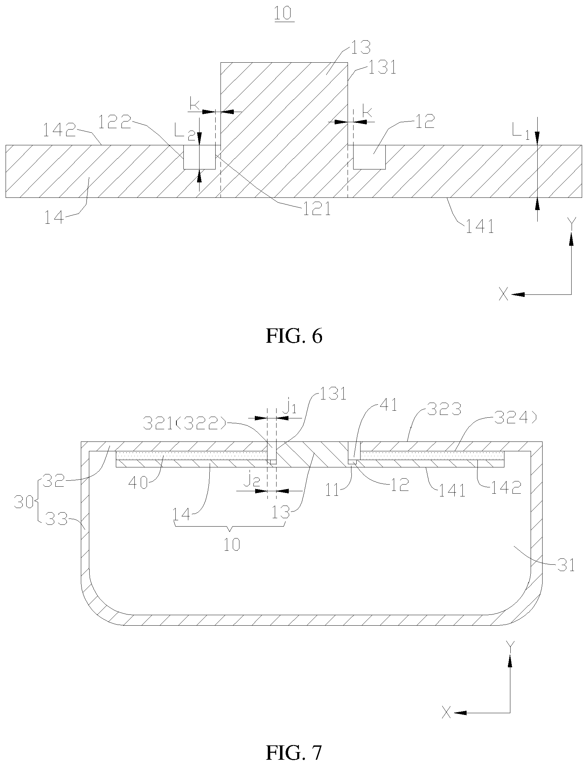

As shown in FIG. 5 and FIG. 6, the shell 30 includes a first wall 32. The through-hole 321 is provided in the first wall 32. A groove 12 is provided on the electrode post 10 along a thickness direction Y of the first wall to form the frangible portion 11.

With the groove 12 provided on the electrode post 10, the thickness of a part corresponding to a bottom face of the groove 12 on the electrode post 10 is smaller than the thickness of the remaining part of the electrode post 10. In this way, the strength of the part corresponding to the bottom face of the groove 12 on the electrode post 10 is lower than the strength of the remaining part of the electrode post 10.

By creating a groove 12 on the electrode post 10, a frangible portion 11 is formed at the part corresponding to the bottom face of the groove 12 on the electrode post 10, thereby simplifying the formation of the frangible portion 11 and reducing the difficulty of preparing the frangible portion 11.

As shown in FIG. 7, in some embodiments, the electrode post 10 includes a body portion 13 and a flange portion 14. The body portion 13 penetrates the through-hole 321. The flange portion 14 protrudes beyond an outer peripheral surface 131 of the body portion along a radial direction X of the body portion. The flange portion 14 is partially recessed at a junction between the flange portion and the body portion 13 along a thickness direction of the flange portion 14 to form the groove 12.

The shell 30 includes a housing 33 and a cover. The housing 33 includes an opening (not shown in the drawing). The cover overlays and seals the opening of the housing 33, so that the housing 33 and the cover together form an accommodation space 31 configured to accommodate the electrode assembly 20. In some embodiments, the cover may be a first wall 32.

The body portion 13 is a cylindrical structure. The body portion 13 penetrates the through-hole 321. Along the radial direction X of the body portion, a clearance 322 exists between an outer peripheral surface 131 of the body portion and a hole wall face of the through-hole 321, so as to avoid a short circuit of the electrochemical device 100 caused by contact between the body portion 13 and the first wall 32 in the through-hole 321.

The flange portion 14 protrudes beyond the outer peripheral face 131 of the body portion along the radial direction X of the body portion. Along the thickness direction of the flange portion 14, the thickness of the flange portion 14 is less than the height of the body portion 13. Along the thickness direction of the flange portion 14, the flange portion 14 includes a first surface 141 and a second surface 142 that are opposite to each other. The first surface 141 is coplanar with one axial end of the body portion 13. The axial direction of the body portion 13 is parallel to the thickness direction of the flange portion 14.

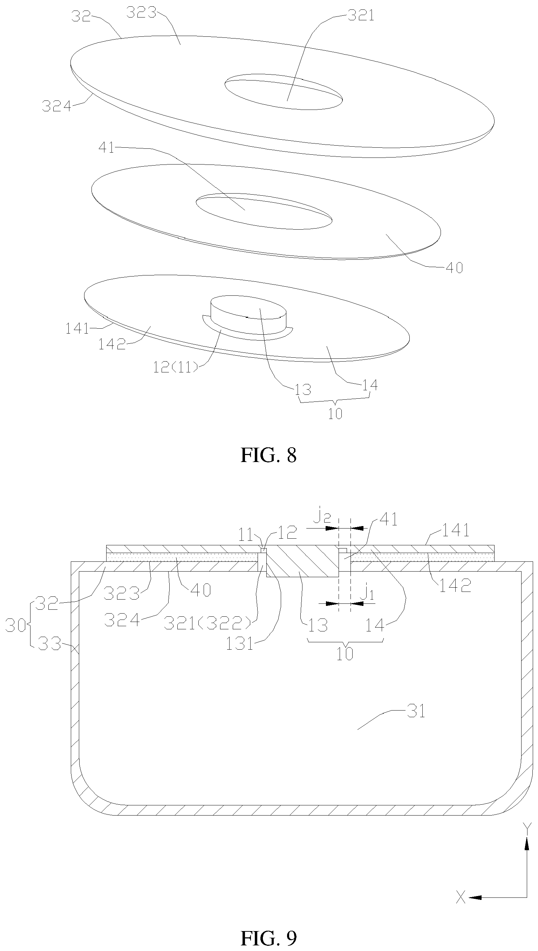

As shown in FIG. 7 and FIG. 8, in some embodiments, the electrochemical device 100 further includes a bonding layer 40. The flange part 14 is connected to the first wall 32 by the bonding layer 40.

In this embodiment, along the radial direction X of the body portion, the flange portion 14 extends until the flange portion overlaps the first wall 32. In other words, along the thickness direction of the flange portion 14, a projection of the flange portion 14 on the first wall 32 partially overlaps the first wall 32. The overlap portion of the flange portion 14 is dielectrically connected to the overlap portion of the first wall 32 by the bonding layer 40, so that the electrode post 10 is dielectrically disposed on the shell 30.

The bonding layer 40 may be a double-sided adhesive tape, or may be a solid-state adhesive layer formed by applying and coagulating a liquid-state adhesive between the first wall 32 and the flange portion 14. The flange portion 14 is connected to the first wall 32 by the bonding layer 40. The connection manner is convenient, and makes the connection stable between the electrode post 10 and the shell 30.

In this embodiment, the bonding layer 40 is an annular structure disposed around the body portion 13. The bonding layer 40 includes a jack 41 in which the body portion 13 can be inserted.

In some embodiments, along the radial direction X of the body portion, a distance j₂ between a hole wall face of the jack 41 and the outer peripheral surface 131 of the body portion is in a relationship with a distance between the hole wall face of the through-hole 321 and the outer peripheral surface 131 of the body portion j₁ (that is, j₁ is the width of the clearance 322), and the relationship satisfies j₂ ≥ j₁. In this way, the bonding layer 40 will not obstruct the broken frangible portion 11 from relieving pressure.

In some embodiments, along the radial direction X of the body portion, the distance between the bonding layer 40 and the outer peripheral surface 131 of the body portion is greater than the width of the groove 12.

The width of the groove 12 is a maximum distance between a first groove wall 121 and a second groove wall 122 of the groove 12 that are disposed opposite to each other along the radial direction X of the body portion. Understandably, the distance j₂ between the hole wall face of the jack 41 of the bonding layer 40 and the outer peripheral surface 131 of the body portion is greater than the width of the groove 12.

The distance between the bonding layer 40 and the outer peripheral surface 131 of the body portion is greater than the width of the groove 12, thereby avoiding a problem that the bonding layer 40 blocks the opening of the groove 12 and obstructs the frangible portion 11 from relieving pressure.

Along the thickness direction of the flange portion 14, the first wall 32 includes a third surface 323 and a fourth surface 324 that are opposite to each other. The third surface 323 is an outer surface of the first wall 32 outside the shell 30, and the fourth surface 324 is an inner surface of the first wall 32 inside the shell 30. The flange portion 14 may be located inside the housing 33 or outside the housing 33. FIG. 7 shows a circumstance in which the flange portion 14 is located inside the housing 33. In the embodiment in which the flange portion 14 is located inside the housing 33, a space is provided outside the shell 30 on a side on which the first wall 32 of the shell 30 is away from the flange portion 14 along the thickness direction Y of the first wall, that is, a space on a side corresponding to the third surface 323 of the first wall 32 is provided. FIG. 9 shows a circumstance in which the flange portion 14 is located outside the housing 33. In FIG. 9, in the embodiment in which the flange portion 14 is located outside the housing 33, a space is provided outside the shell 30 on a side on which the flange portion 14 is away from the first wall 32 of the shell 30 along the thickness direction Y of the first wall, that is, a space on a side corresponding to the first surface 141 of the flange portion 14 is provided.

As shown in FIG. 7, in the embodiment in which the flange portion 14 is located inside the housing 33, a fourth surface 324 of the first wall 32 is dielectrically connected to a second surface 142 of the flange portion 14 by the bonding layer 40. An end face of the body portion 13 away from the flange portion 14 may be coplanar with a third surface 323 of the first wall 32. The coplanarity means that, along the thickness direction of the flange portion 14, the distance between an end of the body portion 13 away from the flange portion 14 and the second surface 142 of the flange portion 14 is equal to the distance between the third surface 323 and the second surface 142 of the flange portion 14. Alternatively, the end face of the body portion 13 away from the flange portion 14 may be non-coplanar with the third surface 323 of the first wall 32. The non-coplanarity means that, along the thickness direction of the flange portion 14, the distance between the end of the body portion 13 away from the flange portion 14 and the second surface 142 of the flange portion 14 is greater than the distance between the third surface 323 and the second surface 142 of the flange portion 14; or, along the thickness direction of the flange portion 14, the distance between the end of the body portion 13 away from the flange portion 14 and the second surface 142 of the flange portion 14 is less than the distance between the third surface 323 and the second surface 142 of the flange portion 14. FIG. 7 shows a circumstance in which the flange portion 14 is located inside the housing 33, and an end face of the body portion 13 away from the flange portion 14 is coplanar with the third surface 323 of the first wall 32. In a case that the flange portion 14 is located inside the shell 30, the body portion 13 of the electrode post 10 is disposed in the through-hole 321 in the first wall 32 of the shell 30, and may be connected to an electrical device to output electrical energy of the electrochemical device 100 or may be connected to a charging device to charge the electrochemical device 100.

In an embodiment in which the flange portion 14 is located outside the housing 33, a third surface 323 of the first wall 32 is dielectrically connected to the second surface 142 of the flange portion 14 by the bonding layer 40. An end face of the body portion 13 away from the flange portion 14 may be coplanar with a fourth surface 324 of the first wall 32. The coplanarity means that, along the thickness direction of the flange portion 14, the distance between an end of the body portion 13 away from the flange portion 14 and the second surface 142 of the flange portion 14 is equal to the distance between the fourth surface 324 and the second surface 142 of the flange portion 14. Alternatively, as shown in FIG. 9, the end face of the body portion 13 away from the flange portion 14 may be non-coplanar with the fourth surface 324 of the first wall 32. The non-coplanarity means that, along the thickness direction of the flange portion 14, the distance between the end of the body portion 13 away from the flange portion 14 and the second surface 142 of the flange portion 14 is greater than the distance between the fourth surface 324 and the second surface 142 of the flange portion 14; or, along the thickness direction of the flange portion 14, the distance between the end of the body portion 13 away from the flange portion 14 and the second surface 142 of the flange portion 14 is less than the distance between the fourth surface 324 and the second surface 142 of the flange portion 14. FIG. 9 shows a circumstance in which the flange portion 14 is located outside the housing 33 and the distance between the end of the body portion 13 away from the flange portion 14 and the second surface 142 of the flange portion 14 is greater than the distance between the fourth surface 324 and the second surface 142 of the flange portion 14. The body portion 13 extends into the accommodation space 31 to facilitate the conductive connection between the body portion 13 and the tab of the electrode assembly 20 (shown in FIG. 4).

In an embodiment in which the electrochemical device 100 includes two electrode posts 10, the shell 30 includes a housing 33 and two first walls 32. Openings are provided at two opposite ends of the housing 33 respectively. The two first walls 32 are configured to seal the two openings respectively. The two electrode posts 10 are dielectrically disposed on the two first walls 32 respectively. The flange portions 14 of the two electrode posts 10 may be both located inside the shell 30, and both located outside the shell 30; or, the flange portion 14 of one of the two electrode posts 10 is located inside the shell 30, and the flange portion 14 of the other one of the two electrode posts 10 is located outside the shell 30.

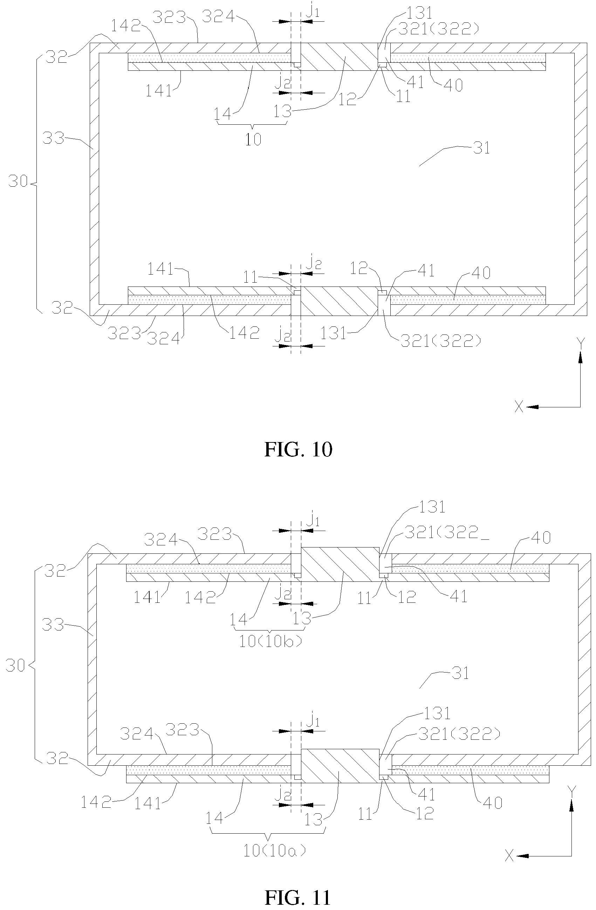

As shown in FIG. 10, the flange portions 14 of the two electrode posts 10 are both located inside the shell 30. The second surfaces 142 of the flange portions 14 of the two electrode posts 10 are bonded to the fourth surfaces 324 of the corresponding first walls 32 by a bonding layer 40. An end face of the body portion 13 of each of the two electrode posts 10, which is away from the flange portion 14, is coplanar with the third surface 323 of the corresponding first wall 32. Alternatively, an end face of the body portion 13 of one of the two electrode posts 10, which is away from the flange portion 14, is coplanar with the third surface 323 of the corresponding first wall 32; and an end face of the body portion 13 of the other one, which is away from the flange portion 14, is non-coplanar with the third surface 323 of the corresponding first wall 32.

As shown in FIG. 11, the flange portion 14 of one (a first electrode post 10a) of the two electrode posts 10 is located outside the shell 30. The second surface 142 of the flange portion 14 of the first electrode post 10a is bonded to the third surface 323 of the corresponding first wall 32 by the bonding layer 40. An end face of the body portion 13 of the first electrode post 10a, which is away from the flange portion 14, is non-coplanar with the fourth surface 324 of the corresponding first wall 32 (FIG. 11 shows a circumstance in which the body portion 13 of the first electrode post 10a extends into the shell 30). The flange portion 14 of the other one (a second electrode post 10b) of the two electrode posts 10 is located inside the shell 30. The second surface 142 of the flange portion 14 of the second electrode post 10b is bonded to the fourth surface 324 of the corresponding first wall 32 by the bonding layer 40. An end face of the body portion 13 of the second electrode post 10b, which is away from the flange portion 14, is non-coplanar with the third surface 323 of the corresponding first wall 32.

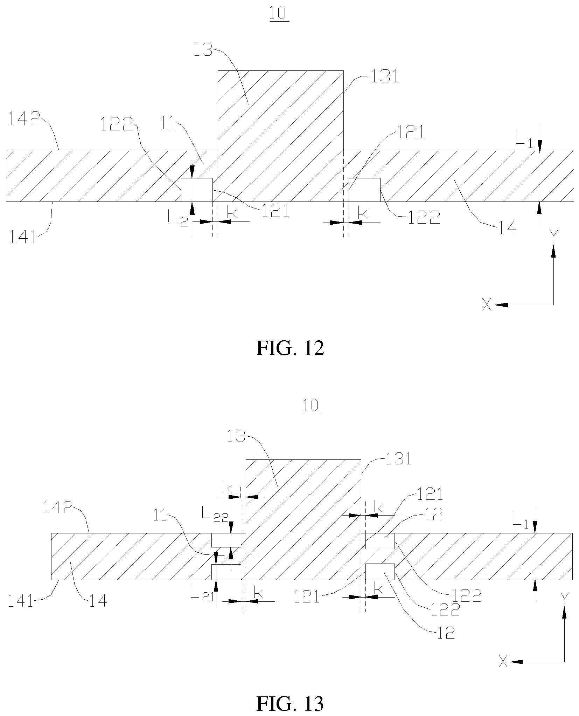

The groove 12 is disposed on the flange portion 14. Along the thickness direction of the flange portion 14, a groove 12 is provided on at least one surface of the flange portion 14, which means two circumstances. In the first circumstance, the groove 12 is provided on one of the first surface 141 or the second surface 142. As shown in FIG. 6, the groove 12 is provided on the second surface 142 and recessed toward the first surface 141, and no groove 12 is provided on the first surface 141. As shown in FIG. 12, the groove 12 is provided on the first surface 141 and recessed toward the second surface 142, and no groove 12 is provided on the second surface 142. In the second circumstance, as shown in FIG. 13, the groove 12 is provided on both the first surface 141 and the second surface 142. The groove 12 on the first surface 141 is recessed toward the second surface 142, and the groove 12 on the second surface 142 is recessed toward the first surface 141. A projection of the groove 12 on the first surface 141 projected onto the second surface 142 falls within the groove 12 on the second surface 142. The depth of the groove 12 on the first surface 141 may be identical to or different from the depth of the groove 12 on the second surface 142.

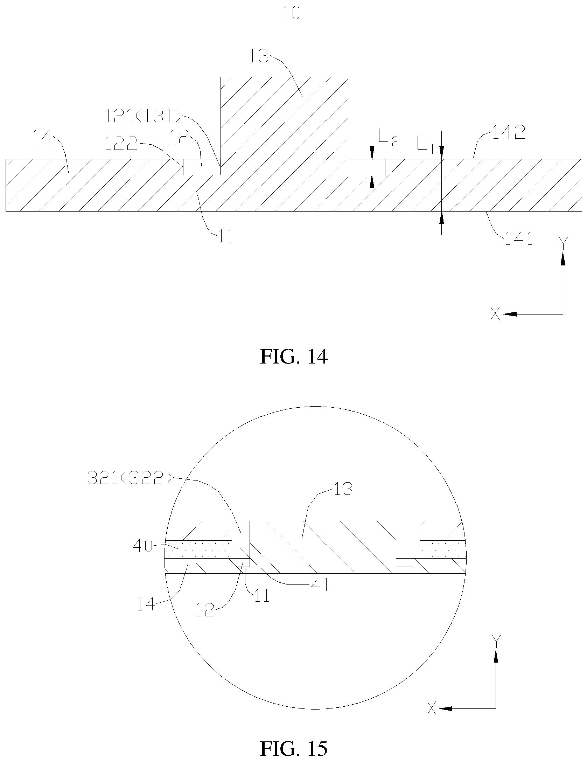

"The flange portion 14 is partially recessed at a junction between the flange portion and the body portion 13 along a thickness direction of the flange portion 14 to form the groove 12" means that the groove 12 is provided near the junction between the flange portion 14 and the body portion 13. As shown in FIG. 6, FIG. 12, and FIG. 13, along the radial direction X of the body portion, the groove 12 includes a first groove wall 121 closest to the body portion 13. The first groove wall 121 is at a distance k from the outer peripheral surface 131 of the body portion. As shown in FIG. 14, the outer peripheral surface 131 of the body portion serves as a groove wall (a first groove wall 121) of the groove 12.

The flange portion 14 protrudes beyond the outer peripheral surface 131 of the body portion along the radial direction X of the body portion, and the groove 12 is provided on the flange portion 14. Therefore, the frangible portion 11 is formed on the flange portion 14. When the internal pressure of the electrochemical device 100 reaches a threshold, the pressure is relieved at the flange portion 14, thereby reducing the risk of an electrical device or a charging device obstructing the frangible portion 11 from relieving the pressure, and further improving the safety performance of the electrochemical device 100.

As shown in FIG. 15, in some embodiments, along the thickness direction Y of the first wall, at least a part of a projection of the frangible portion 11 on the first wall 32 falls in the through-hole 321.

The thickness direction Y of the first wall is parallel to the thickness direction of the flange portion 14. In this embodiment, all the projection of the frangible portion 11 on the first wall 32 falls in the through-hole 321, and falls in a clearance 322 between the hole wall of the through-hole 321 and the outer peripheral surface 131 of the body portion. After the frangible portion 11 is burst by the pressure, the pressure is released through the clearance 322.

In some other embodiments, a part of the projection of the frangible portion 11 on the first wall 32 along the thickness direction Y of the first wall is located in the radial direction X of the body portion, and this part falls in the through-hole 321. Another part of the projection of the frangible portion 11 on the first wall 32 along the thickness direction Y of the first wall is located in the radial direction X of the body portion, and this part falls outside the through-hole 321 and overlaps the first wall 32 along the thickness direction Y of the first wall.

By letting at least a part of the projection of the frangible portion 11 on the first wall 32 fall in the through-hole 321, the frangible portion 11 avoids the hole wall of the through-hole 321. When the frangible portion 11 is broken, the first wall 32 will not obstruct the internal pressure of the electrochemical device 100 from being released from the frangible portion 11, thereby improving the safety performance of the electrochemical device 100.

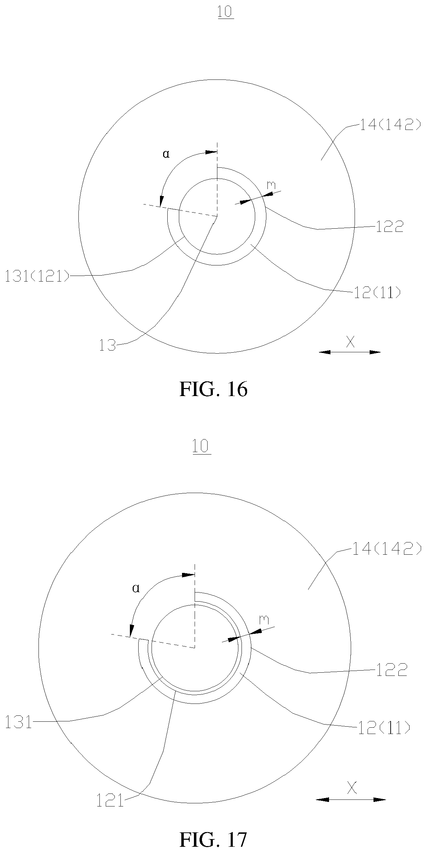

As shown in FIG. 16 and FIG. 17, in some embodiments, the groove 12 extends along a circumferential direction of the body portion 13.

The groove 12 is provided on the flange portion 14 and extends around the body portion 13 along the circumferential direction of the body portion 13 to form an arc-shaped or circular groove 12. The circumferential direction of the body portion 13 is a direction around an axis of the body.

The groove 12 extends along the circumferential direction of the body portion 13. Therefore, the frangible portion 11 formed correspondingly extends along the circumferential direction of the body portion 13. The space on the flange portion 14 is utilized reasonably to form a frangible portion 11 that includes a relatively large pressure relief area. Further, this arrangement enables the pressure to be released along the circumferential direction of the body portion 13, and improves uniformity of pressure release.

Still referring to FIG. 16 and FIG. 17, in an embodiment in which the groove 12 extends along the circumferential direction of the body portion 13, the central angle corresponding to the groove 12 is α, satisfying 45° ≤ α ≤ 315°.

In this embodiment, the groove 12 extends along the circumferential direction of the body portion 13 to form an arc-shaped groove 12. "Central angle" means an angle formed by the radii that pass through two ends of an arc in a circle respectively. Therefore, the central angle of the groove 12 is an angle α between one radius R₁ passing through a first end of the groove 12 along the circumferential direction of the body portion 13 and another radius R₂ passing through a second end of the groove 12 along the circumferential direction of the body portion 13. For example, α is 50°, 55°, 60°, 65°, 70°, 75°, 80°, 85°, 90°, 100°, 200°, 300°, or the like.

If the central angle of the groove 12 is overly small, it means that the dimension by which the groove 12 extends along the circumferential direction of the body portion 13 is relatively small. Therefore, the dimension by which the frangible portion 11 formed by the groove 12 correspondingly extends along the circumferential direction of the body portion 13 is relatively small, which may result in overly low pressure relief efficiency. If the central angle of the groove 12 is excessive, it means that the groove 12 extends along the circumferential direction of the body portion 13 by a relatively large dimension, and the part cocircular with the groove 12 but not included in the groove 12 extends by just a small dimension along the circumferential direction of the body portion 13. Therefore, the part co-circular with the groove 12 but not included in the groove provides insufficient connection strength, and is prone to be torn when the frangible portion 11 is burst by pressure, thereby resulting in detachment of the body portion 13 from the flange portion 14 and giving rise to a safety accident.

Therefore, the central angle α corresponding to the groove 12 is set to satisfy 45° ≤ α ≤ 315°. In this way, the central angle of the frangible portion 11 formed by the groove 12 correspondingly falls within a range of 45° to 315°, so as to ensure that the frangible portion 11 provides a sufficient pressure relief area to facilitate quick pressure relief. In addition, this setting prevents the body portion 13 from being completely detached from the flange portion 14 as impacted by the internal pressure of the electrochemical device 100 after the frangible portion 11 is broken, and avoids the occurrence of safety accidents caused by the complete detachment of the body portion 13 from the flange portion 14 under the impact of the internal pressure of the electrochemical device 100.

Optionally, the central angle satisfies 135° ≤ α ≤ 270°. For example, α may be 140°, 145°, 150°, 160°, 170°, 180°, 190°, 220°, 250°, or the like.

The central angle α corresponding to the groove 12 is set to satisfy 135° ≤ α ≤ 270°. Therefore, the central angle of the frangible portion 11 formed by the groove 12 correspondingly falls within a range of 135° to 270°, so as to ensure that the frangible portion 11 provides a sufficient pressure relief area to facilitate quick pressure relief. In addition, this setting provides a relatively large connection area between the body portion 13 and the flange portion 14 after the frangible portion 11 is broken, makes the body portion 13 unlikely to be completely detached from the flange portion 14 as impacted by the internal pressure of the electrochemical device 100, and avoids the occurrence of safety accidents caused by the complete detachment of the body portion 13 from the flange portion 14 under the impact of the internal pressure of the electrochemical device 100.

In some embodiments, the width of the groove 12 is 0.04 mm to 0.4 mm. The width of the groove 12 being 0.04 mm to 0.4 mm ensures a sufficient pressure relief area on the frangible portion 11 correspondingly formed by the groove 12.

In this embodiment, the width of the groove 12 is a dimension of the groove 12 along the radial direction X of the body portion, that is, a distance between a first groove wall 121 and a second groove wall 122 that are disposed opposite to each other along the radial direction X of the body portion, and is represented by m shown in FIG. 17.

For example, the width of the groove 12 may be 0.05 mm, 0.08 mm, 0.12 mm, 0.15 mm, 0.2 mm, 0.25 mm, 0.28 mm, 0.35 mm, 0.38 mm, and so on.

Optionally, the width of the groove 12 is 0.1 mm to 0.3 mm.

The groove 12 comes in diverse forms. For examples, along an axial direction of the body portion 13, a cross-sectional shape of the groove 12 is at least one of a trapezoid, a triangle, a quadrangle, or a semiellipse. The groove in such a shape is structurally simple and can be conveniently processed and formed.

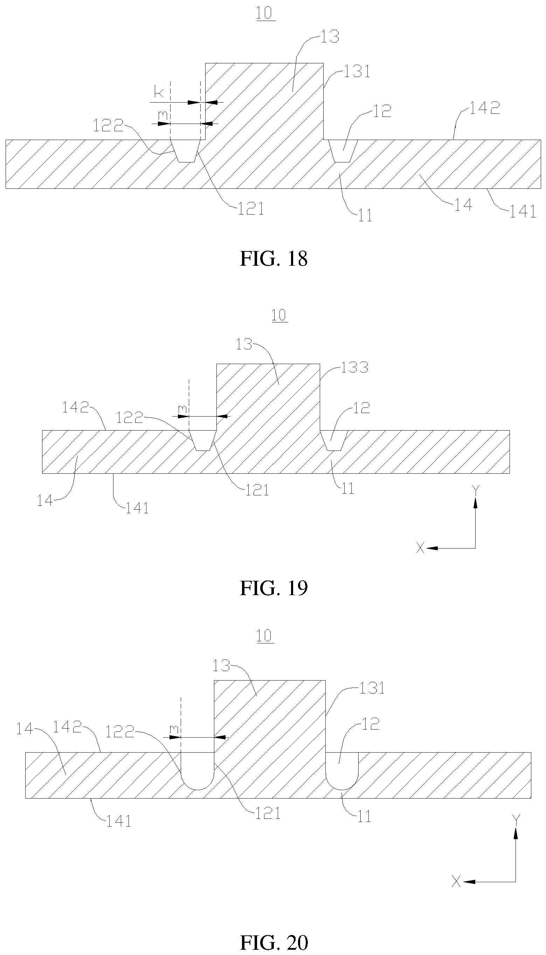

The cross-section of the groove 12 is a surface formed by intersection between the groove 12 and a plane coplanar with the axis of the body portion 13. FIG. 12, FIG. 13, and FIG. 14 show a circumstance in which the cross-section of the groove 12 is a quadrangle. In this case, the groove 12 is a uniform-width structure. FIG. 18 and FIG. 19 show a circumstance in which the cross-section of the groove 12 is a trapezoid. FIG. 20 shows a circumstance in which the cross-section of the groove 12 is a semiellipse. The grooves 12 shown in FIG. 19 and FIG. 20 are nonuniform-width grooves 12. In this case, the width of the groove 12 is the maximum width of the groove 12.

Referring to FIG. 12, FIG. 13, and FIG. 14, in some embodiments, along the thickness direction Y of the first wall, a thickness of the flange portion 14 is L₁, and a depth of the groove 12 is L₂, satisfying 30% ≤ L₂/L₁ ≤ 98%.

In this embodiment, the flange portion 14 is a uniform-thickness structure before the groove 12 is provided. The thickness L₁ of the flange portion 14 is a distance between the third surface 323 and the fourth surface 324 of the first wall 32 along the thickness direction Y of the first wall. As shown in FIG. 12, in an embodiment in which the groove 12 is provided on the first surface 141 and no groove 12 is provided on the second surface 142, the depth L₂ of the groove 12 is a distance between the first surface 141 and the bottom face of the groove 12 along the thickness direction Y of the first wall. As shown in FIG. 14, in an embodiment in which no groove 12 is provided on the first surface 141 but a groove 12 is provided on the second surface 142, the depth of the groove 12 is a distance between the second surface 142 and the bottom face of the groove 12 along the thickness direction Y of the first wall. As shown in FIG. 13, in an embodiment in which the groove 12 is provided on both the first surface 141 and the second surface 142, the depth L₂ of the groove 12 is a sum of the depth L₂₁ of the groove 12 on the second surface 142 (the distance between the first surface 141 and the bottom face of the groove 12 on the first surface 141 along the thickness direction Y of the first wall) and the depth L₂₂ of the groove 12 on the second surface 142 (the distance between the second surface 142 and the bottom face of the groove 12 on the second surface 142 along the thickness direction Y of the first wall).

The greater the depth L₂ of the groove 12, the smaller the thickness of the frangible portion 11, and the smaller the pressure bearable to the frangible portion 11. Specifically, the L₂/L₁ ratio may be 40%, 45%, 50%, 55%, 60%, 65%, 70%, 75%, 80%, 85%, 90%, 95%, or the like.

The thickness L₁ of the flange portion 14 and the depth L₂ of the groove 12 satisfy 30% ≤ L₂/L₁ ≤ 98%. In this way, the frangible portion 11 is strong enough to withstand the pressure fluctuation inside the electrochemical device 100 during normal charge and discharge of the electrochemical device 100, and, when the internal pressure of the electrochemical device 100 reaches the threshold, the frangible portion 11 can be broken in time to release the internal pressure of the electrochemical device 100, thereby reducing the safety hazards such as fire and explosion of the electrochemical device 100.

The thickness of the flange portion 14 varies, and the depth of the corresponding groove 12 may also varies, so that the strength of the frangible portion 11 formed at the corresponding position on the groove 12 can both withstand the internal pressure fluctuations during normal charge and discharge of the electrochemical device 100 and break the frangible portion before occurrence of an accident such as explosion and fire so as to release the pressure inside the electrochemical device 100. Moreover, the value of the L₂/L₁ ratio is correlated with the value of L₁, so that the electrode post can better release the pressure inside the electrochemical device 100 in a corresponding circumstance, so as to improve the safety. For example, in some embodiments, 0.1 mm ≤ L₁ ≤ 0.2 mm, and 30% ≤ L₂/L₁ ≤ 95%.

For example, 0.1 mm ≤ L₁ ≤ 0.2 mm, and the L₂/L₁ ratio may be 35%, 38%, 43%, 48%, 53%, 58%, 63%, 68%, 73%, 78%, 83%, 88%, 93%, or the like.

Optionally, when 0.1 mm ≤ L₁ ≤ 0.2 mm, 70% ≤ L₂/L₁ ≤ 95%.

When the thickness L₁ of the flange portion 14 satisfies 0.1 mm ≤ L₁ ≤ 0.2 mm, although the strength of the flange portion 14 itself is relatively low, if L₂/L₁ < 30%, the thickness of the frangible portion 11 is relatively large, and therefore, the strength of the frangible portion 11 is relatively high, the frangible portion 11 is not broken until a relatively high pressure is exerted on the frangible portion, and the electrochemical device 100 is more prone to accidents such as explosion and fire. If L₂/L₁ > 95%, the thickness of the frangible portion 11 is relatively small, and therefore, the strength of the frangible portion 11 is relatively low. The frangible portion 11 is breakable by just a relatively low pressure, thereby severely disrupting the normal charge and discharge of the electrochemical device 100.

Therefore, in a case that the thickness L₁ of the flange portion 14 satisfies 0.1 mm ≤ L₁ ≤ 0.2 mm, the thickness L₁ of the flange portion 14 and the depth L₂ of the groove 12 satisfy 30% ≤ L₂/L₁ ≤ 95%. In this way, the frangible portion 11 is strong enough to withstand the pressure fluctuation inside the electrochemical device 100 during normal charge and discharge of the electrochemical device 100, and, when the internal pressure of the electrochemical device 100 reaches the threshold, the frangible portion 11 can be broken in time to release the internal pressure of the electrochemical device 100, thereby reducing the safety hazards such as fire and explosion of the electrochemical device 100.

For another example, in some embodiments, when 0.2 mm < L₁ ≤ 0.5 mm, 60% ≤ L₂/L₁ ≤ 98%.

For example, when 0.2 mm < L₁ ≤ 0.5 mm, the L₂/L₁ ratio may be 62%, 63%, 68%, 73%, 78%, 83%, 88%, 93%, 95%, or the like.

Optionally, when 0.2 mm < L₁ ≤ 0.5 mm, 80% ≤ L₂/L₁ ≤ 96%.

When the thickness L₁ of the flange portion 14 satisfies 0.2 mm < L₁ ≤ 0.5 mm, the strength of the flange portion 14 itself is relatively high. If L₂/L₁ < 60%, the thickness of the frangible portion 11 is relatively large, and therefore, the strength of the frangible portion 11 is relatively high, the frangible portion 11 is not broken until a relatively high pressure is exerted on the frangible portion, and the electrochemical device 100 is more prone to accidents such as explosion and fire. If L₂/L₁ > 98%, the thickness of the frangible portion 11 is relatively small, and therefore, the strength of the frangible portion 11 is relatively low. The frangible portion 11 is breakable by just a relatively low pressure, thereby severely disrupting the normal charge and discharge of the electrochemical device 100.

Therefore, in a case that the thickness L₁ of the flange portion 14 satisfies 0.2 mm < L₁ ≤ 0.5 mm, the thickness L₁ of the flange portion 14 and the depth L₂ of the groove 12 satisfy 60% ≤ L₂/L₁ ≤ 98%. In this way, the frangible portion 11 is strong enough to withstand the pressure fluctuation inside the electrochemical device 100 during normal charge and discharge of the electrochemical device 100, and, when the internal pressure of the electrochemical device 100 reaches the threshold, the frangible portion 11 can be broken in time to release the internal pressure of the electrochemical device 100, thereby reducing the safety hazards such as fire and explosion of the electrochemical device 100.

The strength of the flange portion 14 varies, and the depth of the corresponding groove 12 may also varies, so that the strength of the frangible portion 11 formed at the corresponding position on the groove 12 can both withstand the internal pressure fluctuations during normal charge and discharge of the electrochemical device 100 and break the frangible portion before occurrence of an accident such as explosion and fire so as to release the pressure inside the electrochemical device 100. Moreover, the value of the L₂/L₁ ratio is correlated with the value of strength S, so that the electrode post can better release the pressure inside the electrochemical device 100 in a corresponding circumstance, so as to improve the safety. For example, in some embodiments, the strength of the flange portion 14 is S, satisfying: 100 MPa ≤ S ≤ 500 MPa, and 30% ≤ L₂/L₁ ≤ 95%.

For example, when 100 MPa ≤ S ≤ 500 MPa, the L₂/L₁ ratio may be 35%, 40%, 45%, 50%, 55%, 60%, 65%, 70%, 75%, 80%, 85%, 90%, or the like.

When the L₂/L₁ ratio is less than 30%, the strength of the frangible portion 11 is relatively high, the frangible portion 11 is not broken until a relatively high pressure is exerted on the frangible portion, and the electrochemical device 100 is more prone to accidents such as explosion and fire. If L₂/L₁ > 95%, the strength of the frangible portion 11 is relatively low. The frangible portion 11 is breakable by just a relatively low pressure, thereby severely disrupting the normal charge and discharge of the electrochemical device 100.

Therefore, in a case that the strength S of the flange portion 14 satisfies 100 MPa ≤ S ≤ 500 MPa, the thickness L₁ of the flange portion 14 and the depth L₂ of the groove 12 satisfy 30% ≤ L₂/L₁ ≤ 95%. In this way, the frangible portion 11 is strong enough to withstand the pressure fluctuation inside the electrochemical device 100 during normal charge and discharge of the electrochemical device 100, and, when the internal pressure of the electrochemical device 100 reaches the threshold, the frangible portion 11 can be broken in time to release the internal pressure of the electrochemical device 100, thereby reducing the safety hazards such as fire and explosion of the electrochemical device 100.

For another example, the strength of the flange portion 14 is S. When S is greater than 500 MPa, 60% ≤ L₂/L₁ ≤ 98%. Specifically, the L₂/L₁ ratio may be 62%, 63%, 68%, 73%, 78%, 83%, 88%, 93%, 95%, or the like.

Because the strength S of the flange portion 14 is greater than 500 MPa, that is, the strength of the flange portion 14 itself is relatively high, if L₂/L₁ < 60%, the strength of the frangible portion 11 is still relatively high, the frangible portion 11 is not broken until a relatively high pressure is exerted on the frangible portion, and the electrochemical device 100 is more prone to accidents such as explosion and fire. If L₂/L₁ > 98%, the strength of the frangible portion 11 is relatively low. The frangible portion 11 is breakable by just a relatively low pressure, thereby severely disrupting the normal charge and discharge of the electrochemical device 100.

Therefore, in a case that the strength S of the flange portion 14 is greater than 500 MPa, the thickness L₁ of the flange portion 14 and the depth L₂ of the groove 12 satisfy 60% ≤ L₂/L₁ ≤ 98%. In this way, the frangible portion 11 is strong enough to withstand the pressure fluctuation inside the electrochemical device 100 during normal charge and discharge of the electrochemical device 100, and, when the internal pressure of the electrochemical device 100 reaches the threshold, the frangible portion 11 can be broken in time to release the internal pressure of the electrochemical device 100, thereby reducing the safety hazards such as fire and explosion of the electrochemical device 100.

An embodiment of this application further provides an electrical device. The electrical device includes the electrochemical device 100 according to any embodiment described above.

The electrical device further includes an electrical body, and the electrochemical device 100 is configured to supply power to the electrical body. The electrical device includes but is not limited to the following types: electric tools such as an electric drill and an electric chainsaw; electric means of transport such as an electric vehicles, an electric motorcycle, and an electric bicycle; electronic devices such as a mobile phone, a tablet computer, and a laptop computer; and other devices such as an unmanned aerial vehicle, an energy storage device.

The electrochemical device 100 according to any embodiment described above is of relatively high safety, and the electrical device powered by the electrochemical device 100 according to any embodiment described above achieves higher electrical safety.

An embodiment of this application provides an electrochemical device 100. The electrochemical device 100 includes a shell 30, an electrode post 10, and an electrode assembly 20. The shell 30 includes a housing 33 and a first wall 32. The first wall 32 overlays and seals the opening of the housing 33 to form an accommodation space 31 configured to accommodate the electrode assembly 20. The body portion 13 of the electrode post 10 penetrates the through-hole 321 of the first wall 32. Along the radial direction X of the body portion, a clearance 322 exists between an outer peripheral surface 131 of the body portion and a hole wall face of the through-hole 321. The flange portion 14 of the electrode post 10 is located in the shell 30 and is insulated from the first wall 32 by a bonding layer 40. A groove 12 is provided on the second surface 142 of the flange portion 14. A frangible portion 11 is formed on the electrode post 10 at a part corresponding to the bottom face of the groove 12. When the internal pressure of the electrochemical device 100 reaches a threshold, the frangible portion 11 is burst to release the pressure inside the electrochemical device 100.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

## Claims

1. An electrochemical device (100), **characterized in that** the electrochemical device (100) comprises a shell (30), an electrode post (10), and an electrode assembly (20) disposed in the shell (30), a through-hole (321) is provided on the shell (30), the electrode post (10) is disposed on the shell (30) and at least partially accommodated in the through-hole (321), the electrode post (10) is electrically connected to the electrode assembly (20), a frangible portion (11) is provided at a position corresponding to the through-hole (321) on the electrode post (10), and the frangible portion (11) is configured to be burst open when a pressure in the shell (30) reaches a threshold, so as to implement communication between inside and outside of the shell (30) to relieve the pressure.

2. The electrochemical device (100) according to claim 1, **characterized in that** the shell (30) comprises a first wall (32), the through-hole (321) is provided in the first wall (32), and a groove (12) is provided on the electrode post (10) along a thickness direction of the first wall (32) to form the frangible portion (11).

3. The electrochemical device (100) according to claim 2, **characterized in that** the electrode post (10) comprises a body portion (13) and a flange portion (14), the body portion (13) penetrates the through-hole (321), the flange portion (14) protrudes beyond an outer peripheral surface of the body portion (13) along a radial direction of the body portion (13), and the flange portion (14) is partially recessed at a junction between the flange portion (14) and the body portion (13) along a thickness direction of the flange portion (14) to form the groove (12).

4. The electrochemical device (100) according to claim 3, **characterized in that**, along the thickness direction of the first wall (32), a projection of the frangible portion (11) on the first wall (32) falls in the through-hole (321).

5. The electrochemical device (100) according to claim 4, **characterized in that**, along the thickness direction of the first wall (32), a thickness of the flange portion (14) is L₁, and a depth of the groove (12) is L₂, and 30% ≤ L₂/L₁ ≤ 98%.

6. The electrochemical device (100) according to claim 5, **characterized in that** 0.1 mm ≤ L₁ ≤ 0.2 mm, and 30% ≤ L₂/L₁ ≤ 95%.

7. The electrochemical device (100) according to claim 5, **characterized in that** 0.2 mm < L₁ ≤ 0.5 mm, and 60% ≤ L₂/L₁ ≤ 98%.

8. The electrochemical device (100) according to claim 5, **characterized in that** strength of the flange portion (14) is S, 100 MPa ≤ S ≤ 500 MPa, and 30% ≤ L₂/L₁ ≤ 95%.

9. The electrochemical device (100) according to claim 5, **characterized in that** strength of the flange portion (14) is S, S > 500 MPa, and 60% ≤ L₂/L₁ ≤ 98%.

10. The electrochemical device (100) according to claim 3, **characterized in that** the groove (12) extends along a circumferential direction of the body portion (13).

11. The electrochemical device (100) according to claim 10, **characterized in that** a central angle (α) corresponding the groove (12) is α, and 45° ≤ α ≤ 315°.

12. The electrochemical device (100) according to claim 11, **characterized in that** 135° ≤ α ≤ 270°.

13. The electrochemical device (100) according to claim 10, **characterized in that** a width of the groove (12) is 0.04 mm to 0.4 mm.

14. The electrochemical device (100) according to claim 3, **characterized in that**, along an axial direction of the body portion (13), a cross-sectional shape of the groove (12) is at least one of a trapezoid, a triangle, a quadrangle, or a semiellipse.

15. An electrical device, **characterized in that** the electrical device comprises the electrochemical device (100) according to any one of claims 1 to 14.
